# EUROPEAN PATENT SPECIFICATION

(11) **EP 4 347 713 B1**
(45) Date of publication and mention of the grant of the patent: **07.05.2025**
(21) Application number: 22728983.2
(22) Date of filing: 27.05.2022
(51) Int. Cl.: C08L 69/00

(54) **ARTICLES AND STRUCTURES WITH COLORABLE ELECTRO-STATIC DISSIPATIVE (ESD) POLYCARBONATE BLENDS**
ARTIKEL UND STRUKTUREN MIT FÄRBBAREN ELEKTROSTATISCH DISSIPATIVEN (ESD) POLYCARBONATMISCHUNGEN
ARTICLES ET STRUCTURES AVEC MÉLANGES DE POLYCARBONATE DISSIPATIF ÉLECTROSTATIQUE (ESD) COLORABLES

(30) Priority: 28.05.2021 EP 21176739
(43) Date of publication of application: 10.04.2024
(73) Proprietor: SHPP Global Technologies B.V., 4612 PX Bergen op Zoom (NL)
(72) Inventor: JIANG, Xiaoming, Shanghai 201319 (CN); ZHENG, Yun, Shanghai 201319 (CN); CHENG, Yunan, Shanghai 201319 (CN)
(74) Representative: Modiano, Gabriella Diana
(86) International application number: PCT/IB2022/055023
(87) International publication number: WO 2022/249148

(56) References cited:
- US-A1- 2014 197 367
- US-A1- 2019 169 429

## Description

### TECHNICAL FIELD

The disclosure relates to electrostatic dissipative polycarbonate blends, particularly electrostatic dissipative polycarbonate blends that are colorable.

### BACKGROUND

Electrostatic discharge can be detrimental to electronic components, resulting in failures, reduced reliability and increased costs, and latent component failures in deployed equipment. Polymeric materials are typically good insulators but can become conductive or static-dissipative upon the addition of conductive fillers, such as, metallic fillers, non-conductive fillers coated with metallic coatings, or electrically conductive non-metallic fillers, as well as carbon-based fillers such as carbon nanotubes, carbon fibers, and carbon black. The addition of such materials creates a network of interconnecting particles within the polymer matrix, allowing electric charges to conduct through the insulating polymer. Electrostatic dissipative (ESD) and anti-static materials are widely used in various fields like semi-conductors, consumer electronics and industrial constructions to prevent electro-static accumulation. These two types are defined by their surface resistivity (SR), for which the former is in-between 1 × 10⁶ to 1 × 10⁹ Ohms and the latter is 1 × 10¹⁰ to 1 × 10¹² Ohms. Classical ESD materials are generally not colorable as limited by the conductive carbon fillers' natural blackness or darkness. Conversely, those compounds doped with conventional inherently dissipative polymers (IDP) (in order to achieve electrostatic behavior) cannot reach surface resistivity as low as 1 × 10⁹ Ohms notwithstanding their colorless appearance. US 2014/197367 A1 is directed to an electrostatic dissipative composite, comprising a) a continuous thermoplastic polymer phase; and b) at least one dispersed filler phase comprised of a filler composition, comprising i. a conductive carbon black; and ii. a non-conductive polymer; wherein the filler composition is present in a volume percentage loading in the range of from 7,4 to 10,5 relative to a total volume of the composite; and wherein the composite exhibits a surface resistivity in the range of from 10⁶ ohm/sq to 10⁹ ohm/sq. There remains a need in the art for materials having sufficiently low surface resistivity (at least as low as 1 × 10⁹ Ohms), while also maintaining a colorable appearance.

### SUMMARY

Aspects of the present disclosure relate to a polymer composition comprising from about 1 wt. % to about 99 wt. % of a polycarbonate copolymer resin; from about 1 wt. % to about 70 wt. % of a crystalline polyester resin; from about 0.1 wt. % to about 50 wt. % of an inherently dissipative polymer; and from about 0.001 wt. % to about 10 wt. % of a transesterification inhibitor, wherein the polymer composition exhibits a surface resistivity less than 1 × 10⁹ Ohms when measured in accordance with ASTM D257, and wherein the combined weight percent value of all components does not exceed about 100 wt. %, and all weight percent values are based on the total weight of the polymer composition.

In yet other aspects, the present disclosure relates to a method of forming a composition including a polycarbonate copolymer, a crystalline polyester, an inherently dissipative polymer additive, and a transesterification inhibitor.

**In** certain aspects, the disclosure relates to a method of forming an article including the steps of molding an article from the polymer composition described herein.

### BRIEF DESCRIPTION OF THE FIGURES

The accompanying figures, which are incorporated in and constitute a part of this specification, illustrate several aspects and together with the description serve to explain the principles of the disclosure.
FIG. 1 presents Table 5 showing the formulation and properties of C-1, C-2, and EX-2.
FIG. 2 presents Table 6 showing the formulation and properties of C-3, EX-2, EX-3, EX-4, EX-5, EX-6, and EX-7.
FIG. 3 presents Table 7 showing the formulation and properties of EX-8, EX-9, and EX-10.
FIG. 4A shows an image of a molded plate comprising sample EX-2.
FIG. 4B shows an image of a molded plate comprising sample C-3 a conventional conductive carbon black filled polycarbonate.

### DETAILED DESCRIPTION

The control of electrostatic discharges is increasingly challenging given the complexity and sensitivity of microelectronic devices. Even at low voltages, such electrostatic discharges may severely damage sensitive devices. Electro-static dissipative (ESD) and anti-static materials are widely used in various fields like semi-conductors, consumer electronics and industrial constructions to prevent electro-static accumulation. These two types are defined by their surface resistivity (SR), for which the former is in-between 1 × 10⁶ to 1 × 10⁹ Ohms and the latter is 1 × 10¹⁰ to 1 × 10¹² Ohms. Thus, by using a variety of different static dissipative (ESD) materials, accumulation of electrostatic charges on plastic during manufacture or use can be avoided.

However, the incorporation of static dissipative materials (antistatic agents) into a variety of different substrates or polymer resin matrices has its own limitations. Polymers generally require high temperature processing, which may damage or destroy the antistatic agents, thus rendering their ESD properties ineffective. Furthermore, many higher molecular weight ESD reagents are not miscible with certain substrates or matrix polymers used. The use of antistatic agents may also only provide temporary ESD properties to the compositions used. Performance and effectiveness are also limited by environmental conditions such as humidity. Conventional ESD materials also include conductive filler such as carbon fiber, conductive carbon black, graphite, graphene, and carbon nanotubes, which generally also impart a dark color to the composition. Accordingly, classical ESD materials are not readily colorable as the color space may be limited by the conductive carbon fillers' natural blackness. Moreover, while compounds doped by conventional inherently dissipative polymers (IDP) are not darkened by the additive, they typically cannot reach surface resistivity values as low as 1×10⁹ Ohms. Formulations of the present disclosure however achieve both ESD and broad coloring potential while also maintaining desirable electrical, impact, and processing performance.

The present disclosure provides compositions of colorable electrostatic dissipative (ESD) compounds comprising an inherently dissipative polymer (IDP) doped polycarbonate (PEI) and a crystalline polymer such as poly butylene terephthalate (PBT) or poly(1,4-cyclohexylenedimethylene 1,4-cyclohexylenedicarboxylate) (PCCD). The compositions may provide low surface resistivity (SR) at least as low as 1×10⁹ Ohms, making them sufficiently colorable and suitable for ESD applications. The impact, thermal and flow properties are also desirable for manufacturing.

In an aspect, the disclosed compositions comprise from about 1 wt. % to about 99 wt. % of a polycarbonate copolymer resin; from about 1 wt. % to about 70 wt. % of a crystalline polyester resin; from about 0.1 wt. % to about 50 wt. % of an inherently dissipative polymer; and from about 0.001 wt. % to about 10 wt. % of a transesterification inhibitor. The polymer composition may exhibit a surface resistivity less than 1 x 10⁹ Ohms when measured in accordance with ASTM D257. Further, the combined weight percent value of all components does not exceed about 100 wt. %, and all weight percent values are based on the total weight of the polymer composition.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, for example, combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

### Definitions

It is also to be understood that the terminology used herein is for the purpose of describing particular aspects only and is not intended to be limiting. As used in the specification and in the claims, the term "comprising" can include the embodiments "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" includes mixtures of two or more polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additives" means that the additives can or cannot be included and that the description includes polymer compositions that both include and that do not include additional additives.

In one aspect, "substantially free of" may refer to less than 0.5 wt. % or less than about 0.5 wt.% present in a given composition or component. In another aspect, substantially free of can be less than 0.1 wt. %, or less than about 0.1 wt.%. In another aspect, substantially free of can be less than 0.01 wt. %, or less than about 0.01 wt.%. In yet another aspect, substantially free of can be less than 100 parts per million (ppm), or less than about 100 ppm. In yet another aspect, substantially free can refer to an amount, if present at all, below a detectable level. Substantially free of or free of may further refer to a component that has not been added or incorporated into the composition.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Polymer Resin

In an aspect, the polymer composition may comprise a polymer resin. In various aspects, the polymer base resin can include a thermoplastic resin or a thermoset resin. The thermoplastic resin can include polypropylene, polyethylene, ethylene based copolymer, polyamide, polycarbonate, polyester, polyoxymethylene (POM), polybutylene terephthalate (PBT), polyethylene terephthalate (PET), polycyclohexylendimethylene terephthalate (PCT), liquid crystal polymers (LPC), polyphenylene sulfide (PPS), polyphenylene ether (PPE), polyphenylene oxide-polystyrene blends, polystyrene, high impact modified polystyrene, acrylonitrile-butadiene-styrene (ABS) terpolymer, acrylic polymer, polyetherimide (PEI), polyurethane, polyetheretherketone (PEEK), polylactic acid (PLA) based polymers, poly ether sulphone (PES), and combinations thereof. The thermoplastic resin can also include thermoplastic elastomers such as polyamide and polyester based elastomers. The base substrate can also include blends and/or other types of combination of resins described above. In various aspects, the polymer base resin can also include a thermosetting polymer. Appropriate thermosetting resins can include phenol resin, urea resin, melamine-formaldehyde resin, ureaformaldehyde latex, xylene resin, diallyl phthalate resin, epoxy resin, aniline resin, furan resin, polyurethane, or combinations thereof.

In specific aspects the polymer composition comprises a polycarbonate, specifically a polycarbonate copolymer, a polycarbonate homopolymer, or a combination thereof. As used herein, "polycarbonate" refers to an oligomer or polymer including residues of one or more dihydroxy compounds, for example, dihydroxy aromatic compounds, joined by carbonate linkages; it also encompasses homopolycarbonates, copolycarbonates, and (co)polyester carbonates. The terms "residues" and "structural units", used in reference to the constituents of the polymers, are synonymous throughout the specification. The terms "BisA," "BPA," or "bisphenol A," which can be used interchangeably, as used herein refers to a compound having a structure represented by formula (1): 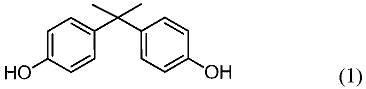 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

Combinations of the polycarbonate with other thermoplastic polymers, for example combinations of homopolycarbonates, copolycarbonates, and polycarbonate copolymers with polyesters, can be used. Useful polyesters include, for example, poly(alkylene dicarboxylates), liquid crystalline polyesters, and polyester copolymers. The polyesters described herein can generally be completely miscible with the polycarbonates when blended.

In further examples, a polycarbonate of the polymer base resin can include a branched polycarbonate. An exemplary branching agent can include, but is not limited to 1,1,1-tris(4-hydroxyphenyl)ethane (THPE). As a further example, the branched polycarbonate resin may be endcapped with an appropriate end-capping agent, such as for example, p-cyanolphenol (known as HBN).

The polymer resin may include a polycarbonate copolymer including units derived from BPA, or a mixture of one or more polycarbonate copolymers including units derived from BPA. In a specific example, the polymer resin can include a polycarbonate copolymer having units derived from BPA and a poly(aliphatic ester)-polycarbonate copolymer derived from sebacic acid.

According to various aspects, the polycarbonate may comprise a high flow PC or a low flow PC, or a combination thereof. A high flow PC may be defined as a polycarbonate having a melt flow index (MFI) greater than 10 g/ 10 minutes at 300 °C/1.2 kg. A low flow PC may be defined as a PC having an MFI less than 10 g/ 10 minutes at 300 °C/1.2 kg when tested in accordance with ASTM D1238.

In some aspects, a polycarbonate copolymer component including a polyester-polycarbonate copolymer. As further described herein, polyesters have repeating units of the following formula (A): 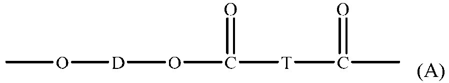 wherein T is a residue derived from a terephthalic acid or chemical equivalent thereof, and D is a residue derived from polymerization of an ethylene glycol, butylene diol, specifically 1,4- butane diol, or chemical equivalent thereof.

In a specific aspect, the polyester unit is derived from the reaction of isophthalic acid, terephthalic acid, and resorcinol (also known as an ITR resin). The polyester unit has the following structure (B): 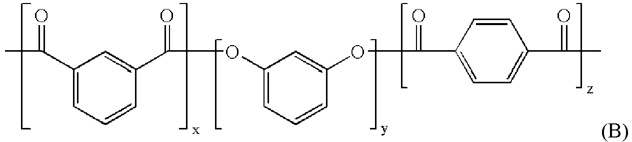 where x corresponds to the molar ratio of the isophthalate, y corresponds to the molar ratio of the resorcinol, and z corresponds to the molar ratio of the terephthalate; x, y, and z adding to 100 percent of the polyester unit. The concentration of polyester (ITR) resin may be least 5%, based on the number of moles in the polymer. In further aspects, the polyester and polycarbonate are used in a molar ratio of from about 5:95 to about 40:60 or more particularly from about 5:95 to about 35:65, depending on the properties desired. The polyester-polycarbonates may have a weight average molecular weight of from about 1,500 to about 100,000 or more particularly from about 2,000 to about 40,000. The polyester-polycarbonate polymer can be a copolymer, especially a block copolymer.

Specifically, the polyester unit of a polyester-polycarbonate may be derived from the reaction of a combination of isophthalic and terephthalic diacids (or derivatives thereof with resorcinol, bisphenol A, or a combination comprising one or more of these, wherein the molar ratio of isophthalate units to terephthalate units is 91:9 to 2:98, specifically 85:15 to 3:97, more specifically 80:20 to 5:95, and still more specifically 70:30 to 10:90. In case the polycarbonate comprises units derived from resorcinol and/or bisphenol A, the molar ratio of resorcinol carbonate units to bisphenol A carbonate units of 0:100 to 99:1, and the molar ratio of the mixed isophthalate-terephthalate polyester units to the polycarbonate units in the polyester-polycarbonate can be 1:99 to 99:1, specifically 5:95 to 90:10, more specifically 10:90 to 80:20. Where a blend of polyester-polycarbonate with polycarbonate is used, the ratio of polycarbonate to polyester-polycarbonate in the blend can be, respectively, 1:99 to 99:1, specifically 10:90 to 90:10.

In a specific aspect, the polycarbonate copolymer may comprise a resorcinol based aryl polyester or a resorcinol based polyester carbonate polymer. ITR (isophthalate terephthalate resorcinol) Resorcinol-based aryl polyesters and "resorcinol-based polyaryl esters" and "resorcinol-based polyarylate" shall all mean a copolymer comprising resorcinol moieties and resorcinol-based ester linkages and possibly other linkages also such as resorcinol-based polycarbonate linkages. These terms are meant to include both polyesters only containing ester bonds and polyester carbonates in instances where resorcinol-based polycarbonate linkages are present. Thus, the polyester-polycarbonate copolymer may comprise repeating structural carbonate units of bisphenol A and repeating structural ester units, which may be any copolymer of BPA polycarbonate and resorcinol phthalate (ITR) (C), and such as (D).

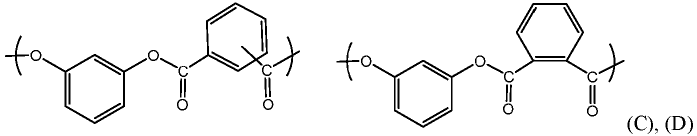

These copolycarbonates may be synthesized by a skilled artisan, or can be obtained commercially, for example, SABIC LEXAN^{™} SLX resin. LEXAN^{™} SLX resin is ITR-polycarbonate copolymer with molecular weight 20,000-30,000, refractive index around 1.59-1.603.

As an example, a resorcinol-based polyaryl ester may comprise both carbonate linkages (for example, between a resorcinol moiety and a bisphenol A moiety) and ester linkages (for example, between a resorcinol moiety and an isophthalic acid moiety). In aspects of the present disclosure, the composition comprises ITR-BPAPC.

In some instances, the resorcinol-based polyarylate resin may contain at least about 40 mole % of moieties derived from resorcinol. The resorcinol moieties can be introduced as the reaction product of resorcinol, or functionalized resorcinol, with an aryl dicarboxylic acid or aryl dicarboxylic acid derivatives suitable for the formation of aryl ester linkages with the resorcinol. Suitable dicarboxylic acid derivatives include, for example, carboxylic acid halides, carboxylic acid esters and carboxylic acid salts.

The resorcinol-based polyarylate may further contain carbonate linkages derived from reaction of a bisphenol and a carbonate forming species, such as phosgene, making the resorcinol-based polyarylate a polyester carbonate copolymer. In another embodiment of the invention, resorcinol polyarylate carbonate copolymers will comprise the reaction products of iso- and terephthalic acid, resorcinol and optionally, bisphenol A and phosgene. In one aspect, the resorcinol polyester carbonate copolymer will be made in such a way that the number of bisphenol dicarboxylic ester linkages is minimized, for example by pre-reacting the resorcinol with the dicarboxylic acid to form an aryl polyester block and then reacting the aryl polyester block with the bisphenol and carbonate moiety to form the polycarbonate portion of the copolymer. Examples of resorcinol ester containing polymers can be found in U.S. Pat. Nos. 6,861,482, 6,559,270, 6,265,522, 6,294,647, 6,291,589 and 5,916,997.

In other examples, the polycarbonate copolymer may include a polycarbonate-dimethyl bisphenol cyclohexane copolymer (DMBPC) including at least 50 mol% dimethyl bisphenol cyclohexane monomer. DMBPC has the formula (E): 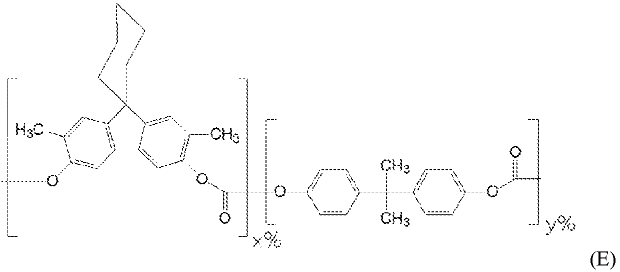 wherein x and y represent the molar ratio of dimethyl bisphenol cyclohexane monomer and polycarbonate monomer, respectively. Thus when x is 50 y is also 50 and the copolymer includes 50 mol% dimethyl bisphenol cyclohexane monomer and 50 mol% polycarbonate monomer. In some aspects x is from 20 to 100.

**In** yet further aspects, the polyester-polycarbonate copolymers contain repeating units of formula (A), above, wherein D is a divalent radical derived from a dihydroxy compound, and may be, for example, a C₂₋₁₀ alkylene radical, a C₆₋₂₀ alicyclic radical, a C₆₋₂₀ aromatic radical or a polyoxyalkylene radical in which the alkylene groups contain 2 to 6 carbon atoms, specifically 2, 3, or 4 carbon atoms; and T is a divalent radical derived from a dicarboxylic acid, and may be, for example, a C₂₋₁₀ alkylene radical, a C₆₋₂₀ alicyclic radical, a C₆₋₂₀ alkyl aromatic radical, or a C₆₋₂₀ aromatic radical.

In one aspect, D is a C₂₋₆ alkylene radical. In another aspect, D is derived from an aromatic dihydroxy compound of formula (F): 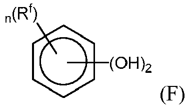 wherein each R^{f} is independently a halogen atom, a C₁₋₁₀ hydrocarbon group, or a C₁₋₁₀ halogen substituted hydrocarbon group, and n is 0 to 4. The halogen is usually bromine. Examples of compounds that may be represented by the formula (7) include resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations comprising at least one of the foregoing compounds.

Examples of aromatic dicarboxylic acids that may be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof. A specific dicarboxylic acid comprises a mixture of isophthalic acid and terephthalic acid wherein the weight ratio of terephthalic acid to isophthalic acid is 91:1 to 2:98. In another specific embodiment, D is a C₂₋₆ alkylene radical and T is p-phenylene, m-phenylene, naphthalene, a divalent cycloaliphatic radical, or a mixture thereof. This class of polyester includes the poly(alkylene terephthalates).

Polysiloxane-polycarbonate copolymers may be useful polycarbonate copolymers and may include 50 wt. % to 99 wt. % of carbonate units and 1 wt. % to 50 wt. % siloxane units. Within this range, the polyorganosiloxane-polycarbonate copolymer can include 70 wt. %, to 98 wt. %, more specifically 75 wt. % to 97 wt. % of carbonate units and 2 wt. % to 30 wt. %, more specifically 3 wt. % to 25 wt. % siloxane units.

In one aspect, the polysiloxane-polycarbonate copolymer can include 10 wt% or less, specifically 6 wt% or less, and more specifically 4 wt% or less, of the polysiloxane based on the total weight of the polysiloxane-polycarbonate copolymer, and can generally be optically transparent and are commercially available under the designation EXL-T from SABIC. In another aspect, the polysiloxane-polycarbonate copolymer can include 10 wt% or more, specifically 12 wt% or more, and more specifically 14 wt% or more, of the polysiloxane copolymer based on the total weight of the polysiloxane-polycarbonate copolymer, are generally optically opaque and are commercially available under the trade designation EXL-P from SABIC.

Polyorganosiloxane-polycarbonates can have a weight average molecular weight of 2,000 Daltons to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards.

The polyorganosiloxane-polycarbonates can have a melt volume flow rate, measured at 300 degrees Celsius (°C) per 1.2 kilogram (kg), of 1 to 50 cubic centimeters per 10 minutes (cm³/10 min), specifically 2 to 30 cm³/10 min. Mixtures of polyorganosiloxane-polycarbonates of different flow properties can be used to achieve the overall desired flow property.

Non-limiting examples of polysiloxane-polycarbonate copolymers can include various copolymers available from SABIC. In an aspect, the polysiloxane-polycarbonate copolymer can contain 6 % by weight polysiloxane content based upon the total weight of the polysiloxane-polycarbonate copolymer. In various aspects, the 6 % by weight polysiloxane block copolymer can have a weight average molecular weight (Mw) of from about 23,000 to 24,000 Daltons using gel permeation chromatography with a bisphenol A polycarbonate absolute molecular weight standard. In certain aspects, the 6% weight siloxane polysiloxane-polycarbonate copolymer can have a melt volume flow rate (MVR) of about 10 cm³/10 min at 300 °C /1.2 kg (see C9030T, a 6 % by weight polysiloxane content copolymer available from SABIC as "transparent" EXL C9030T resin polymer). In another example, the polysiloxane-polycarbonate block can include 20 % by weight polysiloxane based upon the total weight of the polysiloxane block copolymer. For example, an appropriate polysiloxane-polycarbonate copolymer can be a bisphenol A polysiloxane-polycarbonate copolymer endcapped with para-cumyl phenol (PCP) and having a 20 % polysiloxane content (see C9030P, commercially available from SABIC as the "opaque" EXL C9030P). In various aspects, the weight average molecular weight of the 20 % polysiloxane block copolymer can be about 29,900 Daltons to about 31,000 Daltons when tested according to a polycarbonate standard using gel permeation chromatography (GPC) on a cross-linked styrene-divinylbenzene column and calibrated to polycarbonate references using a UV-VIS detector set at 264 nanometers (nm) on 1 milligram per milliliter (mg/ml) samples eluted at a flow rate of about 1.0 ml/minute. Moreover, the 20% polysiloxane block copolymer can have a melt volume rate (MVR) at 300 °C/1.2 kg of 7 cm³/ 10 min and can exhibit siloxane domains sized in a range of from about 5 micron to about 20 micrometers (microns, µm).

The composition may comprise from about 0.1 wt. % to about 99 wt. % of a polycarbonate copolymer. The PC copolymer component may be present in the polymer composition in the range of from at least about 45 wt. % to about 85 wt. %, In further examples, the composition may comprise from about 10 wt. % to about 90 wt. % of a polycarbonate copolymer, or from about 10 wt. % to about 80 wt. % of a polycarbonate copolymer, or from about 20 wt. % to about 80 wt. % of a polycarbonate copolymer, or from about 25 wt. % to about 80 wt. % of a polycarbonate copolymer, or from about 30 wt. % to about 80 wt. % of a polycarbonate copolymer, or from about 40 wt. % to about 80 wt. % of a polycarbonate copolymer, or from about 40 wt. % to about 75 wt. % of a polycarbonate copolymer, or from about 45 wt. % to about 80 wt. % of a polycarbonate copolymer. In certain aspects, at least 45 wt. %may allow the composition to reach a heat distortion temperature of at least 150 °C, or at least about 150 °C, which may be beneficial for the thermoplastic composition's optimal application performance. For optimal performance within the thermoplastic composition, 50-55 wt. %, or about 50-55 wt. %, is preferred.

In various aspects, the disclosed composition may comprise at least one crystalline polyester. Crystallinity, or semi-crystallinity, of a polymer may describe a polymer having molecular chains that are organized or more tightly packed. A result, this highly organized molecular structure may provide a more a defined melting point. These polymers are anisotropic in flow, so they exhibit greater shrinkage transverse to flow rather than with the flow, which can sometimes result in some dimensional instability. There can be varying degrees of crystallinity among different materials and as well as variations among of the same material. The degree of crystallinity can affect many characteristics of the polymer. Molecular weight and branching may affect crystallinity.

The at least one crystalline polyester includes polybutylene terephthalate (PBT), polycyclohexylene dimethylene terephthalate (PCT), polyethylene terephthalate (PET), polyethylene terephthalate glycol (PETG), polycyclohexylene dimethylene terephthalate glycol (PCTG), polycyclohexylene dimethylene terephthalate acid (PCTA), copolymers thereof, or a combination thereof. In a particular aspect the at least one crystalline polyester includes polybutylene terephthalate (PBT).

Certain aspects of the composition include from about 1 wt.% to about 99 wt. % of the at least one crystalline polyester. 50 wt. % to about 97 wt. % of a thermoplastic resin, or from about 40 wt. % to about 97 wt. % of a polymer base resin, or from about 55 wt. % to about 97 wt. % of a polymer base resin, or from about 60 wt. % to about 97 wt. % of a polymer base resin, or from about 70 wt. % to about 97 wt. % of a polymer base resin, or from about 40 wt. % to about 95 wt. % of a polymer base resin, or from about 55 wt. % to about 95 wt. % of a polymer base resin, or from about 60 wt. % to about 95 wt. % of a polymer base resin, or from about 75 wt. % to about 97 wt. % of a polymer base resin.

In various aspects of the present disclosure, the thermoplastic resin may comprise a crystalline polyester. For example, the thermoplastic resin may comprise a polyalkylene ester (a polyester), such as a polyalkylene terephthalate polymer.

As provided herein, polyesters have repeating units of the following formula (A) above. Chemical equivalents of diacids include dialkyl esters, e.g., dimethyl esters, diaryl esters, anhydrides, salts, acid chlorides, acid bromides, and the like. Chemical equivalents of ethylene diol and butylene diol include esters, such as dialkylesters, diaryl esters, and the like. In addition to units derived from a terephthalic acid or chemical equivalent thereof, and ethylene glycol or a butylene diol, specifically 1,4-butane diol, or chemical equivalent thereof, other T and/or D units can be present in the polyester, provided that the type or amount of such units do not significantly adversely affect the desired properties of the thermoplastic compositions. Poly(alkylene arylates) can have a polyester structure according to formula (A), wherein T comprises groups derived from aromatic dicarboxylates, cycloaliphatic dicarboxylic acids, or derivatives thereof.

Examples of specifically useful T groups include, but are not limited to, 1,2-,1,3-, and 1,4-phenylene; 1,4- and 1,5-naphthylenes; cis- or trans- 1,4-cyclohexylene; and the like. Specifically, where T is 1,4-phenylene, the poly(alkylene arylate) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans- 1,4-(cyclohexylene)dimethylene.

Examples of polyalkylene terephthalate include polyethylene terephthalate (PET), poly(1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A useful poly(cycloalkylene diester) is poly(cyclohexanedimethylene terephthalate) (PCT). Combinations including at least one of the foregoing polyesters may also be used.

Copolymers including alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer includes greater than or equal to 50 mol % of poly(ethylene terephthalate), and abbreviated as PCTG where the polymer comprises greater than 50 mol % of poly(1,4-cyclohexanedimethylene terephthalate). Poly(cycloalkylene diester)s can also include poly(alkylene cyclohexanedicarboxylate)s. Of these, a specific example is poly(1,4-cyclohexane- dimethanol-1,4-cyclohexanedicarboxylate) (PCCD), having recurring units of formula (G): 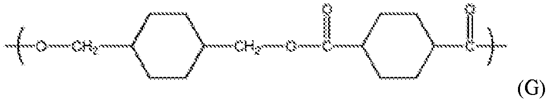 wherein, as described using formula (A), R² is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

In another aspect, the composition can further comprise poly(1,4-butylene terephthalate) or "PBT" resin. PBT may be obtained by polymerizing a glycol component of which at least 70 mol %, preferably at least 80 mol %, consists of tetramethylene glycol and an acid or ester component of which at least 70 mol %, preferably at least 80 mol %, consists of terephthalic acid and/or polyester-forming derivatives thereof. Commercial examples of PBT include those available under the trade names VALOX^{™} 315, VALOX^{™} 195 and VALOX^{™} 176, manufactured by SABIC^{™}, having an intrinsic viscosity of 0.1 deciliters per gram (dl/g) to about 2.0 dl/g (or 0.1 dl/g to 2 dl/g) as measured in a 60:40 phenol/tetrachloroethane mixture or similar solvent at 23 degrees Celsius (°C) to 30° C. In one aspect, the PBT resin has an intrinsic viscosity of 0.1 dl/g to 1.4 dl/g (or about 0.1 dl/g to about 1.4 dl/g), specifically 0.4 dl/g to 1.4 dl/g (or about 0.4 dl/g to about 1.4 dl/g).

As described herein, the composition may comprise from about 0.1 wt. % to about 99 wt. % of a crystalline polyester. In further examples, the composition may comprise from about 0.1 wt. % to about 50 wt. % of a crystalline polyester, or from about 0.1 wt. % to about 30 wt. % of a crystalline polyester, or from about 0.1 wt. % to about 40 wt. % of a crystalline polyester, or from about 0.1 wt. % to about 25 wt. % of a crystalline polyester, or from about 0.1 wt. % to about 15 wt. % of a crystalline polyester, or from about 1 wt. % to about 15 wt. % of a crystalline polyester, or from about 1 wt. % to about 20 wt. % of a crystalline polyester, or from about 0.5 wt. % to about 12 wt. % of a crystalline polyester. The polymer composition may comprise from about 0.1 wt. % to about 70 wt. % of a crystalline polyester.

### Inherently Dissipative Polymer

In various aspects, the disclosed polymer compositions may comprise an inherently dissipative polymer (IDP). An inherently dissipative polymer may refer to a polymer resin having electrostatic dissipative (ESD) properties.

The IDP generally comprises a modified polymer. In certain aspects, the IDP may comprise thermoplastic elastomer, or a modified thermoplastic elastomer. Such materials are generally described as polymers having hard and/or crystalline segments and/or blocks in their backbone structure and having both soft and/or rubbery segments and/or blocks. These may be referred to as multi-block copolymer.

The IDP disclosed herein may be ion-doped. Conventionally, IDP may be sodium ion-doped. IDP of the present disclosure may be phosphonium ion-doped.

In some embodiments, the inherently dissipative polymer comprises a thermoplastic polyurethane (TPU), a polyolefin polyether copolymer, a thermoplastic polyester elastomer (COPE), a polyether block amide elastomer (COPA or PEBA), or a combination thereof. Examples of suitable co-polymers include polyolefin-polyether copolymers.

As an example, the polymer compositions may include IDP comprising a nylon (or polyamide) based multi-block copolymer doped with ions, such as commercially available Pelectron ^{™} AS. By its nature common nylon based IDP is detrimental to PC causing a degradation. However, the specific combination of components of the present disclosure may overcome this potential for degradation. Processing temperatures are desirably maintained as low as possible to prevent IDP reaction with PC and subsequent loss of surface conductivity. The unique composition enables low-temperature processing. As such, processing temperatures may be maintained below 240 °C for extrusion, compounding, or injection molding, particularly for extrusion and injection molding.

As a further example, the polymer compositions may include an IDP comprising a polymeric masterbatches based on polymer resins, such as commercially available avanDISS^{™} 378.

In certain aspects, the type of IDP selected may depend upon the type of polycarbonate. For blending with a polycarbonate copolymer, the Pelectron^{™} AS was the suitable IDP while the AvanDISS^{™} was appropriate for both a polycarbonate copolymer or polycarbonate homopolymer composition.

The IDP may have a surface resistivity of a magnitude of about E+6 to E+8 ohms (for example, 1 × 10⁶ ohms to 9 × 10⁸ ohms. The IDP may have a volume resistivity of about E+4 to E+7 ohms·cm (for example, 1 × 10⁴ ohms to 9 × 10⁷). As an example, the IDP may have a surface resistivity of about 1 ×10⁷ Ohms when tested in accordance with ASTM D257 on a 68 mm x 68 mm x 3 mm plaque specimen.

In some aspects, the polymer composition may include from about 0.1 wt. % to about 50 wt. % of an IDP. In further aspects the composition may include from about 10 wt. % to about 50 wt. % of an IDP, or from about 15 wt. % to about 50 wt. % of an IDP, or from about 50 wt. % to about 70 wt. % of an IDP, or from about 18 wt. % to about 40 wt. % of an IDP, or from about 15 wt. % to about 45 wt. % of an IDP, or from about 12 wt. % to about 35 wt. % of an IDP, from about 12 wt. % to about 40 wt. % of an IDP, or from about 12 wt. % to about 50 wt. % of an IDP, or from about 12 wt. % to about 50 wt. % of an IDP.

### Transesterification inhibitor

The polymer composition may comprise one or more transesterification inhibitors. A transesterification inhibitor may prevent ester exchange reaction of polymers thereby inhibiting polymerization reactions. As is also well-known, the presence of transesterification inhibitors can inhibit the polymerization reaction. U.S. Pat. No. 4,069,278 teaches that in the poly condensation of ethylene glycol and dimethyl terephthalate catalyzed by calcium acetate and antimony oxide, no phosphorus containing stabilizers (catalyst inhibitors) were added at any time.

Suitable transesterification inhibitors are well known in the art and can be selected from the group consisting of inhibitors of phosphorous containing stabilizers such as a pentaerythritol diphosphite (GE Specialty Chemicals, Parkersburg, W. Va., Ultranox^{™} 626), phosphoric acid, and polyphosphoric acid. Other examples are zinc diisopropyl dithiophosphate, tris(2,4-di-t-butylphenyl) phosphite, tris(monononylphenyl) phosphite and mixtures thereof. Further transesterification inhibitors include sodium dihydrogen phosphate, potassium acetate, trimethyl phosphate and phenylphosphoric acid. Orthophosphoric acids represented by the formula xH₂O·yP₂O₅ and satisfying x/y 3, polyphosphoric acids called diphosphoric acid, triphosphoric acid, tetraphosphoric acid and pentaphosphoric acid according to the degree of condensation and satisfying 2DX/y>1 and mixtures thereof are also included. Metaphosphoric acids represented by the formula xH₂O·yP₂O₅ and satisfying x/y =1, especially trimetaphosphoric acid and tetrametaphosphoric acid, and ultraphosphoric acids having a net-like structure with part of the phosphorus pentaoxide structure and satisfying 1>x/y>0 (these may be collectively referred to as "metaphosphoric acid-based compounds") are further included. Acid salts and esters of these phosphoric acids are further included. Out of these, cyclic sodium metaphosphate, ultra-region sodium metaphosphate and diheptyl phosphoric acid DHPA are advantageously used. As a specific example, the transesterification inhibitor may comprise a mixture of mono- and di-stearyl acid phosphate, commercially available as AX71.

The transesterification inhibitor may be present in an amount from about 0.001 wt. % to about 10 wt. % based on the total weight of the polymer composition.

### White pigment

In addition to the polycarbonate copolymer, the crystalline polyester, the IDP, and the transesterification inhibitor, the polymer composition of the present disclosure may further include a white pigment. The white pigment can impart the polymer resin composition with opacity or a bright opaque appearance. In further aspects, the white pigment can impart the polymer resin composition with a white or off-white color. Further, these pigments tend to possess high reflectivity to both near infrared (NIR) and visible light. As used herein, reflectivity can refer to the ability to scatter light away from the surface of the material without absorbing the light at a given wavelength.

Suitable white pigments may include titanium dioxide, zinc sulfide (ZnS), tin oxide, aluminum oxide (AlO₃), zinc oxide (ZnO), calcium sulfate, barium sulfate (BaSO₄), calcium carbonate (e.g., chalk), magnesium carbonate, antimony oxide (Sb₂O₃), white lead (a basic lead carbonate, 2PbCO₃·Pb(OH)₂), lithopone (a combination of barium sulfate and zinc sulfide), sodium silicate, aluminum silicate, silicon dioxide (SiO₂, i.e., silica), mica, clay, talc, metal doped versions of the foregoing materials, and combinations including at least one of the foregoing materials. More particularly, the inorganic white pigment is selected from rutile or anatase titanium dioxide, zinc sulfide, and coated versions thereof such as silanized titanium dioxide. A combination of different types of white pigment can be used. In particular aspects, the white pigment can include titanium dioxide, antimony oxide, zinc oxide, white lead, or lithopone. In some aspects of the present disclosure, talc may be used as a white pigment. Talc may be a suitable white pigment where the material has a sufficiently high color coordinate value to lend the material a white color. In one example, talc having a value of the color coordinate *L (corresponding to the whiteness of a given material) that is greater than 80 would be an appropriate white pigment as described herein.

The white pigment may have an average particle size of 0.01 to 10 micrometers (µm), specifically 0.05 µm to 1 µm, and more particularly 0.1 µm to 0.6 µm. The white pigment can be present in an amount of from about 0.1 wt. % to about 50 wt. %. As an example, the composition may include titanium dioxide in an amount of between 0.1 wt. % and 50 wt. %. In a further example, the composition may include titanium dioxide in an amount between 0.1 wt. % and 20 wt. %.

### Optical agent

In further aspects of the present disclosure, the polymer compositions can include an optical agent. The optical agent may include an optical brightener. Examples of optical brighteners include optical brightening agents (OBAs), fluorescent brightening agents (FBAs), fluorescent whitening agents (FWAs), or the like, or a combination including at least one of the foregoing optical brighteners. As used herein, optical brighteners refer to dyes absorbing light in the ultraviolet and violet region (usually about 340 to about 370 nm) of the electromagnetic spectrum, and re-emit light in the blue region (usually about 420 to about 470 nm). These additives are often used to enhance the appearance of color of a polymer composition, causing a perceived "whitening" effect. According to the perceived whitening effect, a given material can appear less yellow by increasing the overall amount of blue light reflected. Exemplary optical brighteners are triazine-stilbenes (di-, tetra- or hexa-sulfonated), coumarins, imidazolines, diazoles, triazoles, benzoxazolines, biphenyl-stilbenes, or the like or a combination including at least one of the foregoing optical brighteners. In particular aspects of the present disclosure, the optical agent may include, but is not limited to, 4,4'-bis(2-benzoxazolyl)stilbene, available commercially as Eastman Eastobrite^{™} OB-1, or 2,5-bis(5-tert-butyl-2-benzoxazolyl)thiophene, available commercial Tinopal^{™} OB, as or a combination thereof.

In certain aspects the composition includes from about 0.001 wt. % to about 10 wt. % of an optical brightening agent. In further aspects the composition includes from about 0.01 wt. % to about 5 wt. % of an optical brightening agent, or from about 0.01 wt. % to about 1 wt. % of an optical brightening agent.

### Additives

The disclosed thermoplastic composition can include one or more additives conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composite mixture. Exemplary additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof.

The thermoplastic composition disclosed herein can include one or more additional fillers. The filler can be selected to impart additional impact strength and/or provide additional characteristics that can be based on the final selected characteristics of the polymer composition. In some aspects, the filler(s) can include inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers.

Appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, TiO₂, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch, lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations including at least one of the foregoing fillers or reinforcing agents. The fillers and reinforcing agents can be coated with a layer of metallic material to facilitate conductivity, or surface treated, with silanes for example, to improve adhesion and dispersion with the polymer matrix. Fillers generally can be used in amounts of 1 to 200 parts by weight, based on 100 parts by weight of the total composition.

In some aspects, the thermoplastic composition may include a synergist. In various examples fillers may serve as flame retardant synergists. The synergist facilitates an improvement in the flame retardant properties when added to the flame retardant composition over a comparative composition that contains all of the same ingredients in the same quantities except for the synergist. Examples of mineral fillers that may serve as synergists are mica, talc, calcium carbonate, dolomite, wollastonite, barium sulfate, silica, kaolin, feldspar, barytes, or the like, or a combination including at least one of the foregoing mineral fillers. Metal synergists, e.g., antimony oxide, can also be used with the flame retardant. In one example, the synergist may include magnesium hydroxide and phosphoric acid. The mineral filler may have an average particle size of about 0.1 to about 20 µm, specifically about 0.5 to about 10 µm, and more specifically about 1 to about 3 µm.

The thermoplastic composition can include an antioxidant. The antioxidants can include either a primary or a secondary antioxidant. For example, antioxidants can include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants can generally be used in amounts of from 0.01 to 0.5 parts by weight, based on 100 parts by weight of the total composition, excluding any filler.

In various aspects, the thermoplastic composition can include a mold release agent. Exemplary mold releasing agents can include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from about 0.1 to about 1.0 parts by weight, based on 100 parts by weight of the total composition, excluding any filler.

In an aspect, the thermoplastic composition can include a heat stabilizer. As an example, heat stabilizers can include, for example, organo phosphites such as triphenyl phosphite, tris-(2,6-dimethylphenyl)phosphite, tris-(mixed mono-and di-nonylphenyl)phosphite or the like; phosphonates such as dimethylbenzene phosphonate or the like, phosphates such as trimethyl phosphate, or the like, or combinations including at least one of the foregoing heat stabilizers. Heat stabilizers can generally be used in amounts of from 0.01 to 0.5 parts by weight based on 100 parts by weight of the total composition, excluding any filler.

In further aspects, light stabilizers can be present in the thermoplastic composition. Exemplary light stabilizers can include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers can generally be used in amounts of from about 0.1 to about 1.0 parts by weight, based on 100 parts by weight of the total composition, excluding any filler.

The thermoplastic composition can also include plasticizers. For example, plasticizers can include phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from about 0.5 to about 3.0 parts by weight, based on 100 parts by weight of the total composition, excluding any filler.

In further aspects, the disclosed composition can include antistatic agents. These antistatic agents can include, for example, glycerol monostearate, sodium stearyl sulfonate, sodium dodecylbenzenesulfonate or the like, or combinations of the foregoing antistatic agents. In one aspect, carbon fibers, carbon nanofibers, carbon nanotubes, carbon black, or any combination of the foregoing can be used in a polymeric resin containing chemical antistatic agents to render the composition electrostatically dissipative.

Ultraviolet (UV) absorbers can also be present in the disclosed thermoplastic composition. Exemplary ultraviolet absorbers can include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB^{™} 5411); 2-hydroxy-4-n-octyloxybenzophenone (CYASORB^{™} 531); 2-[4,6-bis(2,4-dimethylphenyl)-1,3,5-triazin-2-yl]- 5-(octyloxy)-phenol (CYASORB^{™} 1164); 2,2'-(1,4- phenylene)bis(4H-3,1-benzoxazin-4-one) (CYASORB^{™} UV- 3638); 1,3-bis[(2-cyano-3,3-diphenylacryloyl)oxy]-2,2-bis[[(2-cyano-3, 3-diphenylacryloyl)oxy]methyl]propane (UVINUL^{™} 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

The thermoplastic composition can further include a lubricant. As an example, lubricants can include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants can generally be used in amounts of from about 0.1 to about 5 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. In one example, TSAN can include 50 wt. % PTFE and 50 wt. % SAN, based on the total weight of the encapsulated fluoropolymer. The SAN can include, for example, 75 wt. % styrene and 25 wt. % acrylonitrile based on the total weight of the copolymer. An anti-drip agent, such as TSAN, can be used in amounts of 0.1 to 10 parts by weight, based on 100 parts by weight of the total composition, excluding any filler.

As an example, the disclosed composition can include an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the IZOD impact) are improved. In some examples, the chemically reactive impact modifier can be an ethylene copolymer with reactive functional groups selected from, but not limited to, anhydride, carboxyl, hydroxyl, and epoxy.

In further aspects of the present disclosure, the composition can include a rubbery impact modifier. The rubber impact modifier can be a polymeric material which, at room temperature, is capable of recovering substantially in shape and size after removal of a force. However, the rubbery impact modifier should typically have a glass transition temperature of less than 0° C. In certain aspects, the glass transition temperature (Tg) can be less than -5° C, -10° C, -15° C, with a T_{g} of less than -30° C typically providing better performance. Representative rubbery impact modifiers can include, for example, functionalized polyolefin ethylene-acrylate terpolymers, such as ethylene-acrylic esters-maleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain anhydride moieties which are grafted onto the polymer in a post polymerization step.

In one example, the composition can include a core-shell copolymer impact modifier having about 80 wt. % of a core including poly(butyl acrylate) and about 20 wt. % of a shell including poly(methyl methacrylate). In a further example, the impact modifier can include an acrylic impact modifier such as ethylene-ethylacrylate copolymer with an ethyl acrylate content of less than 20 wt. % (such as EXL 3330 as supplied by SABIC). The composition can include about 5 wt. % of the ethylene-ethylacrylate copolymer.

In many aspects, the compositions can be prepared according to a variety of methods. The compositions of the present disclosure can be blended, compounded, or otherwise combined with the aforementioned ingredients by a variety of methods involving intimate admixing of the materials with any additional additives desired in the formulation. Because of the availability of melt blending equipment in commercial polymer processing facilities, melt processing methods can be used. In various further aspects, the equipment used in such melt processing methods can include, but is not limited to, co-rotating and counter-rotating extruders, single screw extruders, co-kneaders, disc-pack processors and various other types of extrusion equipment. In a further aspect, the extruder is a twinscrew extruder. In various further aspects, the composition can be processed in an extruder at temperatures from about 180 °C to about 350 °C, particularly 250 °C to 300 °C.

### Properties and Articles

The disclosed combination of IDP, polycarbonate (PC) or its copolymer (ITR-BPAPC, SLX) and a crystalline polymer provides desirable ESD properties while maintaining a broad color space. The disclosed compositions also achieve balanced performance in electrical, aesthetics, impact and processing by the combined merits of crystalline polymers and unique amorphous PC or PC copolymers.

In certain aspects, the compositions may exhibit electrostatic dissipative properties. For example, in some aspects, the compositions may exhibit a surface resistivity less than 1×10⁹ Ohms when measured in accordance with ASTM D257.

As provided herein, compositions of the present disclosure are colorable. Colorable may describe the ease of coloring of the polymer composition. That is, the polymer composition may be sufficiently "light" in color to accept dyes, pigments, or other color treatments/additives that impart a desired hue to the composition. Conventional dissipative materials often include dissipative additives that are dark in color such as carbon fiber or carbon black. As such the color space for conventional ESD materials may be limited. The disclosed compositions may alleviate these restrictions as they achieve surface resistivities less than 1×10⁹ Ohms when tested in accordance with ASTM D257, while also being colorable. Values of the present disclosure have certain values for certain colorimetric coordinates L*, a*, b*. The "L* value" describes the lightness-darkness property. If the L* value is 0, the object is black. If the L* value is 100 the object is white. The L* value is always positive. Compositions having an L* value further away from the extremes (0 and 100) have a more natural color, which may be the selected color for a specific application or which may enable the composition to be more easily colored. Having values further away from 0 and closer to 100 for L* results in a composition that has a much wider "color space". The "color space" is the range of L* that can be achieved using an optional colorant, pigment and/or dye. L* may be measured using ASTM 2244 With 10° observer; International Commission on Illumination (CIE) Standard Illuminant D65 illuminant; specular component included (SCI) reflectance; and large aperture). The polymer composition may exhibit an L* color value of at least about 50 or at least about 80 or at least about 90 when measured using a spectrophotometer with D65 illumination in a 10° observer in reflection mode.

These compositions are thus a suitable candidate for consumer electronics/semiconductor/construction applications and enable a critical capability to be made into ESD products with customized color. Furthermore, these compositions demonstrate the potential to replace carbon fiber, conductive carbon black, graphite, graphene, carbon nano tube, etc., filled ESD materials in the market.

In various aspects, the present disclosure relates to articles including the compositions herein. The compositions can be molded into useful shaped articles by a variety of means such as injection molding, extrusion, rotational molding, blow molding and thermoforming to form articles. The compositions can be useful in the manufacture of articles requiring materials with high modulus, good flow, good impact strength, thermal conductivity, and reflectivity.

The advantageous characteristics of the compositions disclosed herein can make them appropriate for an array of uses. Formed articles can include, but are not limited to, personal computers, notebook and portable computers, cell phone antennas and other such communications equipment, medical applications, radio-frequency identification RFID applications, automotive applications, and the like. In various further aspects, the article can be appropriate as a computer and business machine housing such as a housing for high end laptop personal computers, monitors, robotics, a handheld electronic device housing (such as a housing or flash holder for smart phones, tablets, music devices), electrical connectors, light-emitting diode LED heat sink, and components of lighting fixtures, wearables, ornaments, home appliances, and the like.

In a further aspect, non-limiting examples of fields in which the thermoplastic compositions can be employed can include electrical, electro-mechanical, radio frequency (RF) technology, telecommunication, automotive, aviation, medical, sensor, military, and security. In a still further aspect, the thermoplastic compositions can also be present in overlapping fields, such as mechatronic systems that integrate mechanical and electrical properties which can, for example, be used in automotive or medical engineering.

In a further aspect, the suitable article can be an electronic device, automotive device, telecommunication device, medical device, security device, or mechatronic device. In a still further aspect, the article can be selected from a computer device, electromagnetic interference device, printed circuit, Wi-Fi device, Bluetooth device, GPS device, cellular antenna device, smart phone device, automotive device, medical device, sensor device, security device, shielding device, RF antenna device, LED device, and RFID device. In yet a further aspect, the article can be selected from a computer device, sensor device, security device, RF antenna device, LED device and RFID device.

In a further aspect, the molded articles can be used to manufacture devices in the automotive field. In a still further aspect, non-limiting examples of such devices in the automotive field which can use the disclosed blended thermoplastic compositions in the vehicle's interior include adaptive cruise control, headlight sensors, windshield wiper sensors, and door/window switches. In a further aspect, non-limiting examples of devices in the automotive field which can the disclosed blended thermoplastic compositions in the vehicle's exterior include pressure and flow sensors for engine management, air conditioning, crash detection, and exterior lighting fixtures.

In a further aspect, the resulting disclosed compositions can be used to provide any desired shaped, formed, or molded articles. For example, the disclosed compositions can be molded into useful shaped articles by a variety of means such as injection molding, extrusion, rotational molding, blow molding and thermoforming. As noted above, the disclosed compositions are particularly well suited for use in the manufacture of electronic components and devices. As such, according to some aspects, the disclosed compositions can be used to form articles such as printed circuit board carriers, burn in test sockets, flex brackets for hard disk drives, and the like.

### ASPECTS

Aspect 1. A polymer composition comprising: from about 0.1 wt. % to about 99 wt. % of a polycarbonate copolymer, homopolymer or a blend thereof; from about 0.1 wt. % to about 70 wt. % of a crystalline polyester; from about 0.1 wt. % to about 50 wt. % of an inherently dissipative polymer; and from about 0.001 wt. % to about 10 wt. % of a transesterification inhibitor, wherein the polymer composition exhibits a surface resistivity less than 1 × 10⁹ Ohms when measured in accordance with ASTM D257, and wherein the combined weight percent value of all components does not exceed about 100 wt. %, and all weight percent values are based on the total weight of the polymer composition.

Aspect 1B. A polymer composition consisting of: from about 0.1 wt. % to about 99 wt. % of a polycarbonate copolymer, homopolymer or a blend thereof; from about 0.1 wt. % to about 70 wt. % of a crystalline polyester; from about 0.1 wt. % to about 50 wt. % of an inherently dissipative polymer; and from about 0.001 wt. % to about 10 wt. % of a transesterification inhibitor, wherein the polymer composition exhibits a surface resistivity less than 1 × 10⁹ Ohms when measured in accordance with ASTM D257, and wherein the combined weight percent value of all components does not exceed about 100 wt. %, and all weight percent values are based on the total weight of the polymer composition.

Aspect 1C. A polymer composition consisting essentially of: from about 0.1 wt. % to about 99 wt. % of a polycarbonate copolymer, homopolymer or a blend thereof; from about 0.1 wt. % to about 70 wt. % of a crystalline polyester; from about 0.1 wt. % to about 50 wt. % of an inherently dissipative polymer; and from about 0.001 wt. % to about 10 wt. % of a transesterification inhibitor, wherein the polymer composition exhibits a surface resistivity less than 1 × 10⁹ Ohms when measured in accordance with ASTM D257, and wherein the combined weight percent value of all components does not exceed about 100 wt. %, and all weight percent values are based on the total weight of the polymer composition.

Aspect 2. The polymer composition of any of aspects 1A-1C, wherein the polycarbonate copolymer comprises ITR-BPAPC, BPAPC or a combination thereof.

Aspect 3. The polymer composition of any one of aspects 1A-2, wherein the polyester comprises polybutylene terephthalate, polyethylene terephthalate, or 1,4-cyclohexanedimethyl-1,4-cyclohexanedicarboxylate), or a combination thereof.

Aspect 4. The polymer composition of any one of aspects 1A-3, wherein the inherently dissipative polymer comprises an ion-doped thermoplastic polyurethane (TPU) based multi-block copolymer.

Aspect 5. The polymer composition of any one of aspects 1A-4, wherein the inherently dissipative polymer comprises an ion-doped nylon-based multi-block copolymer.

Aspect 6. The polymer composition of any one of aspects 1A-5, wherein the inherently dissipative polymer has a surface resistivity of about 1 × 10⁷ Ohms when tested in accordance with ASTM D257 on a 68 mm x 68 mm x 3 mm plaque specimen.

Aspect 7. The polymer composition of any one of aspects 1A-6, wherein the transesterification inhibitor comprises mono zinc phosphate, a mixture of mono- and di-stearyl acid phosphate, or an alkyl acid phosphate.

Aspect 8. The polymer composition of any one of aspects 1A-8, wherein the polymer composition exhibits a surface resistivity from 1×10⁶ and 1×10⁹ Ohms when measured in accordance with ASTM D257.

Aspect 9. The polymer composition of any one of aspects 1A-8, wherein the polymer composition exhibits an L* color value of at least about 50 when measured using a spectrophotometer with D65 illumination in a 10° observer in reflection mode.

Aspect 10. The polymer composition of any one of aspects 1A-9, wherein the polymer composition exhibits an L* color value of at least about 80 when measured using a spectrophotometer with D65 illumination in a 10° observer in reflection mode.

Aspect 11. The polymer composition of any one of aspects 1A-10, wherein the polymer composition is free of or substantially free of carbon fiber, conductive carbon black, graphite, graphene, carbon nanotubes, or carbon nanostructures.

Aspect 12. The polymer composition of any one of aspects 1A-11, wherein the polymer composition further comprises polycarbonate-siloxane copolymer.

Aspect 13. The polymer composition of any one of aspects 1A-11, wherein the polymer composition further comprises an impact modifier.

Aspect 14. The polymer composition of any one of aspects 1A-13, wherein the polymer composition exhibits a heat deflection temperature of at least 90 °C when tested in accordance with ASTM D648 at 0.45 MPa and a specimen thickness of 3.2 mm.

Aspect 15. The polymer composition of any one of aspects 1A-14, wherein the composition further comprises an optical brightening agent.

Aspect 16. The polymer composition of aspect 15, wherein the additive comprises a pigment, a dye, a filler, a plasticizer, a fiber, a flame retardant, an antioxidant, a lubricant, wood, glass, metal, an ultraviolet agent, an anti-static agent, an anti-microbial agent, or a combination thereof.

### EXAMPLES

Detailed aspects of the present disclosure are disclosed herein; it is to be understood that the disclosed aspects are merely exemplary of the disclosure that may be embodied in various forms. Therefore, specific structural and functional details disclosed herein are not to be interpreted as limits, but merely as a basis for teaching one skilled in the art to employ the present disclosure. The specific examples below will enable the disclosure to be better understood. However, they are given merely by way of guidance and do not imply any limitation.

The following examples are provided to illustrate the compositions, processes, and properties of the present disclosure. The examples are merely illustrative and are not intended to limit the disclosure to the materials, conditions, or process parameters set forth therein.

### General Materials and Methods

The compositions as set forth in the Examples below were prepared from the components presented in Table 1.

**Table 1. Components of the compositions**

| **Item Description** | **Chemical Description** | **Source** |
|---|---|---|
| High flow PC | PCP 1300; BPA Polycarbonate; MW 21,600 - 22,200 Daltons; melt flow index (MFI) about 27 g/10 min | SABIC |
| Low flow PC | 100 Grade PCP; BPA Polycarbonate; MW 29,900 - 31,000 Daltons; MFI about 7 g/10 min | SABIC |
| SLX 90/10 | ITRPC-BPAPC Copolymer; isophthalate terephthalate resorcinol polycarbonate copolymer with molecular weight 20,000-30,000, refractive index around 1.59-1.603. | SABIC |
| PBT315 | Polybutylene terephthalate PBT | Changchun Plastic |
| PET | Polyethylene terephthalate PET | SABIC |
| Pentaerythritol Tetrastearate | Pentaerythritol tetrastearate (PETS); mold release additive | FACL |
| PCCD | poly (1,4-cyclohexylenedimethylene 1,4-cyclohexylenedicarboxylate) (PCCD) | Eastman Chemical |
| MZP | Mono zinc phosphate; stabilizer | Budenheim |
| IDP | Inherently dissipative polymer IDP1 (Pelectron^{™} AS) | Sanyo Chemical Industries |
| IDP2 | Inherently dissipative polymer IDP2 (AvanDISS^{™} 378) | Avanzare |
| Transesterification inhibitor (BN-1) | Mono- and di- stearyl acid phosphate; stabilizer | Sanyo Chemical Industries |
| Transesterification inhibitor (AX71) | Octadecyl phosphate; stabilizer | ADEKA |

The compositions as set forth in the Examples below were prepared from the components presented in Table 1.

Formulations were prepared by extruding the pre-blended components using a twin extruder. The polymer base resins (polycarbonate and polyester), IDP, inhibitor and additives are premixed and fed via the main throat. The extrudate was cooled using a water bath prior to pelletizing. Components were compounded using a Toshiba^{™} TEM-37BS Twin Screw Extruder co-rotating twin screw extruder at between 240 °C and 250 °C. The compounding and molding conditions used are shown in Tables 2 and 3. Processing temperatures were maintained as possible, as IDP has large potential to react with polycarbonate and cause a degradation and ultimately loss of surface conductivity. The specific combination of components overcame this technical hurdle enabling low-temperature processing as in this disclosure.

**Table 2. Compounding conditions for colorable ESD Polycarbonate grades**

| | Output (kg/hr) | Screw (RPM) | Vacuum (bar) | Torque (%) | Barrel temp.°C | Die temp.°C |
|---|---|---|---|---|---|---|
| Setting condition | 40 | 400 | -0.08 | 56 | 240 | 250 |

**Table 3. Injection molding conditions for colorable ESD Polycarbonate grades**

| Molding parameters | unit | Value |
|---|---|---|
| Pre-drying time | Hour | 6 |
| Pre-drying temp | °C | 70 |
| Hopper temp | °C | 70 |
| Zone 1 temp | °C | 220 |
| Zone 2 temp | °C | 220 |
| Zone 3 temp | °C | 220 |
| Nozzle temp | °C | 220 |
| Mold temp | °C | 50 |

Molded samples were tested in accordance with the standards presented in table 4.

**Table 4. Testing standards**

| | |
|---|---|
| Heat deflection temperature, HDT | ASTM D 648, 0.45 MPa, 3.2 mm |
| Notched Izod Impact (NII) | ASTM D256, room temperature |
| Surface Resistivity (SR) | ASTM D257 |
| Melt volume flow rate (MVR) | ISO1133, 2.16 kg |

Optical properties, such as color and reflectivity, were measured on a ColorEye^{™} 7000A with D65 illumination in a 10° observer in reflection mode. Assessments were made according to the International Commission on Illumination (CIE) providing values for colorimetric coordinates L*, a*, b*. The coordinates correspond to different color attributes: a* represents redness and green; b*, yellow and blue; and L*, whiteness. Values of L* range between 0 and 100. Lower L* values correspond to darkness of a material while values of L* greater than 70 correspond to materials appearing to approximate white to the naked eye.

The notched Izod impact ("NII") test was carried out in accordance with ASTM D256 on 63.5 mm x 12.7 mm x 3.2 mm molded samples (bars) at 25 °C. Data units are J/m.

The unnotched Izod impact ("UNII") test was performed in accordance with ASTM D4812 on 63.5 mm x 12.7 mm x 3.2 mm molded samples (bars) at 25 °C. Data units are J/m.

The melt volume rate (MVR) was determined according to ISO 1133 at 2.16 kg at 220 °C

Heat deflection temperature was determined per ASTM D 648 with flatwise specimen orientation with a 3.2 mm thick specimen (127 mm x 12.7 mm) at 0.45megapascals (MPa). Data are provided in units of °C.

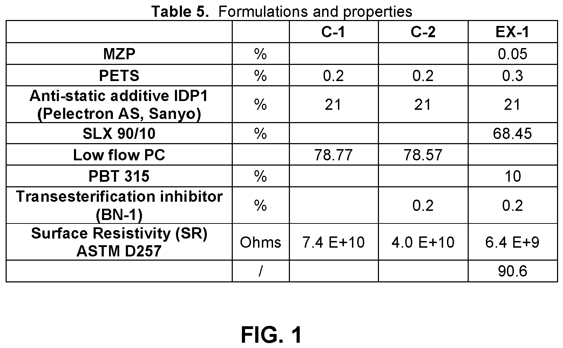

Comparative samples C-1 and C-2 were prepared to assess the performance of formulations with and without the transesterification inhibitor. Comparative samples did not include the polycarbonate copolymer or the polyester PBT 315. Table 5 (shown in FIG. 1) presents the formulations and properties (surface resistivity and L*) observed.

The combination of nylon-based IDP with pure PC (C-1 and C-2 in Table 5) did not reduce the surface resistivity to below 1x10¹⁰ Ohms, regardless of whether additional transesterification inhibitor was added. For EX-1, ITR-BPAPC copolymer SLX and PBT were used the building blocks and the surface resistivity was lowered to 1x10⁹ Ohms in line with ESD requirement. SLX is good at chemical resistance thus it can hold as intact upon nylon-based IDP's attack, and PBT as crystalline polymer is also immune to nylon. In addition, PBT flows faster than amorphous PC and brings IDP closer to the molded part surface, which is crucial for conductive network formation.

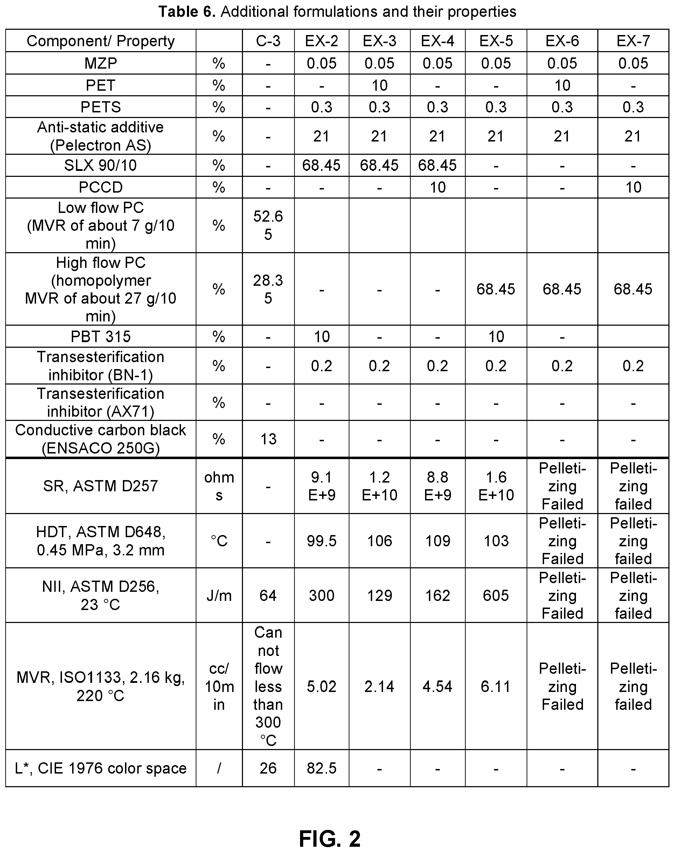

Formulations in Table 5 were compounded via small-scaled screw in order to prevent any thermal degradation. For a more general manufacturing purposes, further samples were prepared using a conventionally sized screw. Their formulations and their corresponding performance are presented in Table 6 (FIG. 2).

EX-2 reproduced the results of EX-1 result exhibiting a surface resistivity as low as E+9 Ohms. Values for HDT and notched Izod impact (NII) were also still at a high level. Compared to EX-1's SLX/PBT, EX-5 did not maintain surface resistivity as 1x10⁹ Ohms where only PC homopolymer (rather than ITR PC copolymer) was used. For other crystalline polymers blending with SLX, PCCD in EX-4 achieved a low surface resistivity, but EX-3 having PET as the polyester polymer base resin did not. EX-4 including IDP/SLX/PCCD also maintained a high HDT and NII. For blends of PC homopolymer with PET (EX-6) or PCCD (EX-7), the pelletizing failed as extruded strands did not hold their shape. Without being bound by any particular theory, this may be attributed to the degradation of PC homopolymer, while SLX (ITR -BPAPC copolymer) exhibited good chemical resistance. With comparison to control sample C-3 (commercial grade name DD000), one can easily find that our claimed formulae (EX-2 to EX-5) all have much higher toughness as measured by notched Izod impact. Regarding processing freedom, conventional conductive carbon black-filled PC (C-3) cannot be processed below 300 °C, while EX-2 to EX-5 in Table 5.2 can all be injection molded at 220 °C.

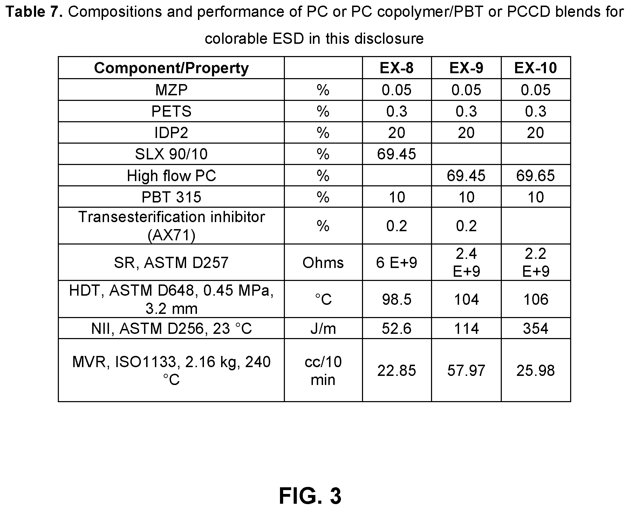

A further IDP was investigated. AvanDISS^{™} 378, which is produced by Avanzare is not a nylon based polymer, and is conventionally considered not as chemically aggressive as Pelectron^{™} AS to PC. Table 7 (shown in FIG. 3) presents three blends of avanDISS^{™} 378/SLX or PC homopolymer/PBT which exhibited a surface resistivity as low as 1 × 10⁹ Ohms, and also comparable heat/mechanical properties.

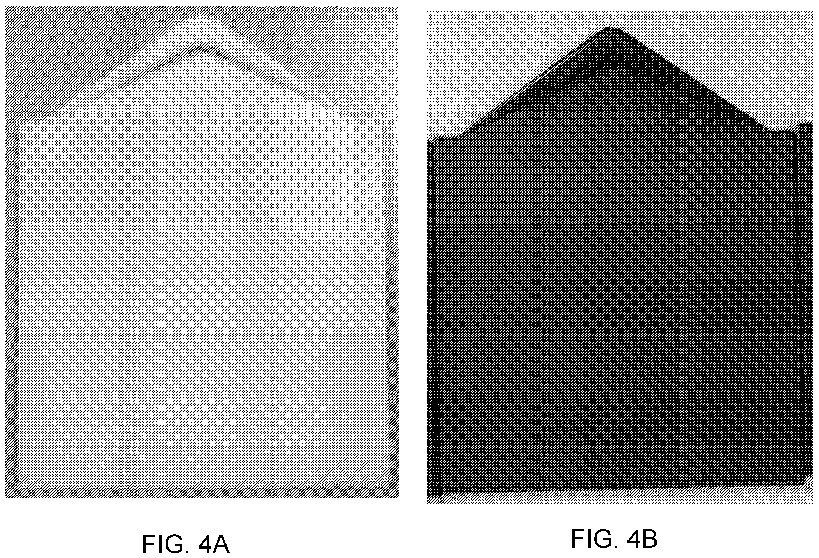

Samples were also evaluated for optical properties via visual inspection with the naked eye and via spectrophotometer. Another crucial feature of the formulations was the appearance of all the listed blends are approximately white. As shown in FIG. 4A, a molded plate formed from an PC copolymer/PBT/IDP blend (EX-2) is white or light in color, thus enabling further coloring. In FIG. 4B, a conventional ESD material (C-3) appeared completely black with no potential to be colored. L* values shown in Tables 5 and 6 also quantitatively indicated the potential to be colored. L* value of EX-1 and EX-2 are 90.6 and 82.5, respectively. This implied a high potential to be further colored. For control sample C-3 (a conductive carbon black-filled PC), the L* value observed was 26. This blackness or darkness inhibits any further color space.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A polymer composition comprising:
from 0.1 wt. % to 99 wt. % of a polycarbonate copolymer, homopolymer or a blend thereof;
from 0.1 wt. % to 70 wt. % of a crystalline polyester;
from 0.1 wt. % to 50 wt. % of an inherently dissipative polymer; and
from 0.001 wt. % to 10 wt. % of a transesterification inhibitor,
wherein the polymer composition exhibits a surface resistivity less than 1 × 10⁹ Ohms when measured in accordance with ASTM D257, and
wherein the combined weight percent value of all components does not exceed 100 wt. %, and all weight percent values are based on the total weight of the polymer composition.

2. The polymer composition of claim 1, wherein the polycarbonate copolymer comprises ITR-BPAPC, BPAPC or a combination thereof.

3. The polymer composition of any one of claims 1-2, wherein the polyester comprises polybutylene terephthalate, polyethylene terephthalate, or 1,4-cyclohexanedimethyl-1,4-cyclohexanedicarboxylate), or a combination thereof.

4. The polymer composition of any one of claims 1-3, wherein the inherently dissipative polymer comprises an ion-doped thermoplastic polyurethane (TPU) based multi-block copolymer.

5. The polymer composition of any one of claims 1-4, wherein the inherently dissipative polymer comprises an ion-doped nylon-based multi-block copolymer.

6. The polymer composition of any one of claims 1-5, wherein the inherently dissipative polymer has a surface resistivity of 1 × 10⁷ Ohms when tested in accordance with ASTM D257 on a 68 mm x 68 mm x 3 mm plaque specimen.

7. The polymer composition of any one of claims 1-6, wherein the transesterification inhibitor comprises mono zinc phosphate, a mixture of mono- and di-stearyl acid phosphate, or an alkyl acid phosphate.

8. The polymer composition of any one of claims 1-7, wherein the polymer composition exhibits a surface resistivity from 1×10⁶ and 1×10⁹ Ohms when measured in accordance with ASTM D257.

9. The polymer composition of any one of claims 1-8, wherein the polymer composition exhibits an L* color value of at least 50 when measured using a spectrophotometer with D65 illumination in a 10° observer in reflection mode.

10. The polymer composition of any one of claims 1-9, wherein the polymer composition exhibits an L* color value of at least 80 when measured using a spectrophotometer with D65 illumination in a 10° observer in reflection mode.

11. The polymer composition of any one of claims 1-10, wherein the polymer composition is free of or substantially free of carbon fiber, conductive carbon black, graphite, graphene, carbon nanotubes, or carbon nano-structures.

12. The polymer composition of any one of claims 1-11, wherein the polymer composition further comprises polycarbonate-siloxane copolymer or an impact modifier.

13. The polymer composition of any one of claims 1-12, wherein the polymer composition exhibits a heat deflection temperature of at least 90 °C when tested in accordance with ASTM D648 at 0.45 MPa and a specimen thickness of 3.2 mm.

14. The polymer composition of any one of claims 1-13, wherein the composition further comprises an optical brightening agent.

15. The polymer composition of any one of claims 1-14, wherein the composition further comprises an additive comprising a pigment, a dye, a filler, a plasticizer, a fiber, a flame retardant, an antioxidant, a lubricant, wood, glass, metal, an ultraviolet agent, an anti-static agent, an anti-microbial agent, or a combination thereof.

## Patentansprüche

1. Eine Polymerzusammensetzung, die Folgendes umfasst:
0,1 Gewichtsprozent bis 99 Gewichtsprozent eines Polycarbonatcopolymers, Homopolymers oder einer Mischung davon;
0,1 Gewichtsprozent bis 70 Gewichtsprozent eines kristallinen Polyesters;
0,1 Gewichtsprozent bis 50 Gewichtsprozent eines inhärent dissipativen Polymers und
0,001 Gewichtsprozent bis 10 Gewichtsprozent eines Umesterungsinhibitors,
wobei die Polymerzusammensetzung einen spezfischen Oberflächenwiderstand von weniger als 1 x 10⁹ Ohm aufweist, gemessen nach ASTM D257, und
wobei der kombinierte Gewichtsprozentwert aller Komponenten 100 Gewichtsprozent nicht überschreitet und alle Gewichtsprozentwerte auf dem Gesamtgewicht der Polymerzusammensetzung basieren.

2. Die Polymerzusammensetzung gemäß Anspruch 1, wobei das Polycarbonatcopolymer ITR-BPAPC, BPAPC oder eine Kombination davon umfasst.

3. Die Polymerzusammensetzung gemäß einem beliebigen der Ansprüche 1-2, wobei der Polyester Polybutylenterephthalat, Polyethylenterephthalat oder 1,4-Cyclohexandimethyl-1,4-cyclohexandicarboxylat) oder eine Kombination davon umfasst.

4. Die Polymerzusammensetzung gemäß einem beliebigen der Ansprüche 1-3, wobei das inhärent dissipative Polymer ein mit Ionen dotiertes Multi-Blockcopolymer auf der Basis von thermplastischem Polyurethan (TPU) umfasst.

5. Die Polymerzusammensetzung gemäß einem beliebigen der Ansprüche 1-4, wobei der inhärent dissipative Polymer ein mit Ionen dotiertes Multi-Blockcopolymer auf Nylonbasis umfasst.

6. Die Polymerzusammensetzung gemäß einem beliebigen der Ansprüche 1-5, wobei das inhärent dissipative Polymer einen spezifischen Oberflächenwiderstand von 1 x 10⁷ Ohm aufweist, getestet nach ASTM D257 an einer Plättchenprobe von 68 mm x 68 mm x 3 mm.

7. Die Polymerzusammensetzung gemäß einem beliebigen der Ansprüche 1-6, wobei der Umesterungsinhibitors Monozinkphosphat, eine Mischung aus Mono- und Di-Stearylsäurephosphat oder ein Alkylsäurephosphat umfasst.

8. Die Polymerzusammensetzung gemäß einem beliebigen der Ansprüche 1-7, wobei die Polymerzusammensetzung einen spezifischen Oberflächenwiderstand von 1x10⁶ und 1x10⁹ Ohm aufweist, gemessen nach ASTM D257.

9. Die Polymerzusammensetzung gemäß einem beliebigen der Ansprüche 1-8, wobei die Polymerzusammensetzung einen L*-Farbwert von mindestens 50 aufweist, gemessen unter Verwendung eines Spektralphotometers mit D65-Beleuchtung in einem 10°-Beobachter im Reflexionsmodus.

10. Die Polymerzusammensetzung gemäß einem beliebigen der Ansprüche 1-9, wobei die Polymerzusammensetzung einen L*-Farbwert von mindestens 80 aufweist, gemessen unter Verwendung eines Spektralphotometers mit D65-Beleuchtung in einem 10°-Beobachter im Reflexionsmodus.

11. Die Polymerzusammensetzung gemäß einem beliebigen der Ansprüche 1-10, wobei die Polymerzusammensetzung frei oder im Wesentlichen frei ist von Kohlenstofffaser, leitfähigem Ruß, Graphit, Graphen, Kohlenstoff-Nanoröhrchen oder Kohlenstoff-Nanostrukturen.

12. Die Polymerzusammensetzung gemäß einem beliebigen der Ansprüche 1-11, wobei die Polymerzusammensetzung weiter Polycarbonat-Siloxan-Copolymer oder einen Elastifikator umfasst.

13. Die Polymerzusammensetzung gemäß einem beliebigen der Ansprüche 1-12, wobei die Polymerzusammensetzung eine Wärmeformbeständigkeit von mindestens 90°C aufweist, getestet nach ASTM D648 bei 0,45 MPa und einer Probendicke von 3,2 mm.

14. Die Polymerzusammensetzung gemäß einem beliebigen der Ansprüche 1-13, wobei die Zusammensetzung weiter einen optischen Aufheller umfasst.

15. Die Polymerzusammensetzung gemäß einem beliebigen der Ansprüche 1-14, wobei die Zusammensetzung weiter einen Zusatzstoff umfasst, der ein Pigment, einen Farbstoff, einen Füllstoff, einen Weichmacher, eine Faser, ein Flammverzögerungsmittel, ein Antioxidans, ein Schmiermittel, Holz, Glas, Metall, einen ultravioletten Stoff, einen antistatischen Stoff, einen antimikrobiellen Stoff oder eine Kombination davon umfasst.

## Revendications

1. Composition de polymère comprenant
de 0,1 % en poids à 99 % en poids d'un copolymère de polycarbonate, d'un polycarbonate homopolymère ou d'un mélange de ceux-ci;
de 0,1 % en poids à 70 % en poids d'un polyester cristallin;
de 0,1 % en poids à 50 % en poids d'un polymère intrinsèquement dissipatif, et
de 0,001 % en poids à 10% en poids d'un inhibiteur de transestérification, où la composition polymère présente une résistivité de surface inférieure à 1 x 10⁹ Ohms lorsqu'elle est mesurée conformément à la norme ASTM D257, et
où la valeur en pourcentage de poids combiné, de tous les composants ne dépasse pas 100 % en poids et toutes les valeurs en pourcentage de poids sont basées sur le poids total de la composition de polymère.

2. Composition de polymère selon la revendication 1, dans laquelle le copolymère de polycarbonate comprend de l'ITR-BPAPC, du BPAPC ou une combinaison de ceux-ci.

3. Composition de polymère selon l'une des revendications 1 à 2, dans laquelle le polyester comprend du polybutylène téréphtalate, du polyéthylène téréphtalate, ou du 1,4-cyclohexanediméthyl-1,4- cyclohexanedicarboxylate), ou une combinaison de ceux-ci.

4. La composition de polymère selon l'une des revendications 1 à 3, dans laquelle le polymère intrinsèquement dissipatif comprend un copolymère multibloc à base de polyuréthane thermoplastique (TPU) dopé aux ions.

5. La composition de polymère selon l'une des revendications 1 à 4, dans laquelle le polymère intrinsèquement dissipatif comprend un copolymère multibloc à base de nylon dopé aux ions.

6. La composition de polymère selon l'une des revendications 1 à 5, dans laquelle le polymère intrinsèquement dissipatif présente une résistivité de surface de 1 x 10⁷ Ohms lorsqu'il est testé conformément à la norme ASTM D257 sur un échantillon de plaque de 68 mm x 68 mm x 3 mm.

7. La composition de polymère selon l'une des revendications 1 à 6, dans laquelle l'inhibiteur de transestérification comprend du phosphate de mono zinc, un mélange de phosphate d'acide mono- et di-stéarylique, ou un phosphate d'acide alkyle.

8. La composition de polymère selon l'une des revendications 1-7, où la composition de polymère présente une résistivité de surface comprise entre 1x10⁶ et 1×10⁹ Ohms lorsqu'elle est mesurée conformément à la norme ASTM D257.

9. La composition de polymère selon l'une des revendications 1 à 8, où la composition de polymère présente une valeur de couleur L* d'au moins 50 lorsqu'elle est mesurée à l'aide d'un spectrophotomètre avec un éclairage D65 dans un observateur de 10° en mode réflexion.

10. La composition de polymère selon l'une des revendications 1 à 9, où la composition de polymère présente une valeur de couleur L* d'au moins 80 lorsqu'elle est mesurée à l'aide d'un spectrophotomètre avec un éclairage D65 dans un observateur de 10° en mode réflexion.

11. La composition de polymère selon l'une des revendications 1 à 10, où la composition de polymère est sans ou essentiellement sans fibres de carbone, noir de carbone conducteur, graphite, graphène, nanotubes de carbone ou nanostructures de carbone.

12. La composition de polymère selon l'une des revendications 1 à 11, où la composition de polymère comprend en outre un copolymère polycarbonate-siloxane ou un modificateur d'impact.

13. La composition de polymère selon l'une des revendications 1 à 12, où la composition de polymère présente une température de déflexion thermique d'au moins 90 °C lorsqu'elle est testée conformément à la norme ASTM D648 à 0,45 MPa et une épaisseur d'échantillon de 3,2 mm.

14. La composition de polymère selon l'une des revendications 1 à 13, où la composition comprend en outre un agent de blanchiment optique.

15. La composition de polymère selon l'une des revendications 1 à 14, où la composition comprend en outre un additif composé de pigment, d'un colorant, d'une charge, d'un plastifiant, d'une fibre, d'un retardateur d'inflammation, d'un antioxydant, d'un lubrifiant, de bois, de verre, de métal, d'un agent UV, d'un antistatique, d'un agent antimicrobien ou d'une combinaison de ceux-ci.
